# EUROPÄISCHE PATENTSCHRIFT

(11) **EP 4 003 649 B1**
(45) Veröffentlichungstag und Bekanntmachung des Hinweises auf die Patenterteilung: **16.04.2025**
(21) Anmeldenummer: 20739924.7
(22) Anmeldetag: 08.07.2020
(51) Int. Cl.: B23Q 3/06, B25B 5/06, B23Q 1/00

(54) **BOHRUNGSSPANNER**
BORE CLAMP
COLLIER DE SERRAGE

(30) Priorität: 29.07.2019 DE 102019120427
(43) Veröffentlichungstag der Anmeldung: 01.06.2022
(73) Patentinhaber: Ludwig Ehrhardt GmbH, 35321 Laubach (DE)
(72) Erfinder: GRAULICH, Oliver, 35321 Laubach (DE)
(74) Vertreter: v. Bezold & Partner Patentanwälte - PartG mbB
(86) Internationale Anmeldenummer: PCT/EP2020/069250
(87) Internationale Veröffentlichungsnummer: WO 2021/018532

(56) Entgegenhaltungen:
- EP-A2- 1 046 468
- WO-A1-2015/139838
- DE-A1- 102008 049 753
- DE-A1- 19 917 146

## Beschreibung

Die Erfindung betrifft einen Bohrungsspanner zum Spannen eines Werkstücks.

Ein derartiger Bohrungsspanner ist beispielsweise aus EP 3 330 041 B1 bekannt. Bei einem Spannvorgang wird hierbei eine Spannbuchse des Bohrungsspanners in eine entsprechende Werkstückbohrung in dem zu spannenden Werkstück eingeführt und dann in radialer Richtung aufgeweitet, wodurch die Spannbuchse in der Werkstückbohrung verankert wird. Das Aufweiten der Spannbuchse erfolgt durch einen verschiebbaren Spannbolzen, der koaxial in der Spannbuchse angeordnet ist und einen Kopf aufweist, der sich zu seinem freien Ende hin konisch erweitert. Beim Einziehen des Spannbolzens erweitert der Spannbolzen deshalb die Spannbuchse in radialer Richtung, wodurch die Spannbuchse in der Werkstückbohrung verankert wird. Beim weiteren Anziehen des Spannbolzens wird das Werkstück dann auf eine Werkstückauflage an dem Bohrungsspanner gezogen und gespannt. Der mechanische Antrieb des Spannbolzens erfolgt hierbei üblicherweise hydraulisch durch einen Kolben, der in dem Bohrungsspanner parallel zur Spannrichtung verschiebbar ist. Diese bekannte Konstruktion eines Bohrungsspanners ist jedoch hinsichtlich des Antriebs des Spannbolzens noch nicht optimal.

Zum technischen Hintergrund der Erfindung ist auch hinzuweisen auf EP 1 046 468 A1, DE 199 17 146 A1 und DE 10 2008 049 753 A1.

Schließlich offenbart WO 2015/139838 A1 einen Bohrungsspanner gemäß dem Oberbegriff von Anspruch 1. Dieser bekannte Bohrungsspanner ist jedoch noch nicht optimal.

Der Erfindung liegt deshalb die Aufgabe zugrunde, einen verbesserten Bohrungsspanner zu schaffen.

Diese Aufgabe wird durch einen erfindungsgemäßen Bohrungsspanner gemäß dem Hauptanspruch gelöst.

Der erfindungsgemäße Bohrungsspanner eignet sich zum Spannen eines Werkstücks mit einer in dem Werkstück befindlichen Werkstückbohrung. Der im Rahmen der Erfindung verwendete Begriff eines Werkstücks ist allgemein zu verstehen und nicht auf Werkstücke beschränkt, die anschließend bearbeitet werden sollen, beispielsweise in einer Fräsmaschine. Vielmehr umfasst der im Rahmen der Erfindung verwendete Begriff eines Werkstücks auch andere Typen von Bauteilen.

In Übereinstimmung mit dem eingangs beschriebenen bekannten Bohrungsspanner weist auch der erfindungsgemäße Bohrungsspanner eine Spannbuchse auf, die in radialer Richtung aufgeweitet werden kann, um die Spannbuchse in einer Werkstückbohrung des zu spannenden Werkstücks zu verankern. In einem bevorzugten Ausführungsbeispiel der Erfindung weist die Spannbuchse mehrere getrennte Spannsegmente auf, die über den Umfang der Spannbuchse verteilt angeordnet sind, wobei Trennschlitze zwischen den einzelnen Spannsegmenten eine radiale Aufweitung der Spannsegmente erlauben.

Darüber hinaus weist auch der erfindungsgemäße Bohrungsspanner einen Spannbolzen auf, der koaxial durch die Spannbuchse verläuft und in einer Spannrichtung zwischen einer Spannstellung und einer Entspannstellung axial verschiebbar ist. In der Spannstellung weitet der Spannbolzen die Spannbuchse radial auf, um die Spannbuchse in der Werkstückbohrung des zu spannenden Werkstücks zu verankern. In der Entspannstellung wird die Spannbuchse dagegen in radialer Richtung nicht aufgeweitet, damit die Spannbuchse in der Entspannstellung in die Werkstückbohrung eingeführt oder aus der Werkstückbohrung herausgezogen werden kann.

Darüber hinaus weist auch der erfindungsgemäße Bohrungsspanner einen Spannbolzenantrieb auf, um den Spannbolzen in der Spannrichtung in die Spannstellung zu bewegen.

Der erfindungsgemäße Bohrungsspanner zeichnet sich nun durch eine besondere Konstruktion des Spannbolzenantriebs aus. So weist der erfindungsgemäße Spannbolzenantrieb einen Kolben auf, der bezüglich der Spannrichtung lateral verschoben werden kann. In dem bevorzugten Ausführungsbeispiel der Erfindung ist dieser Kolben rechtwinklig zur Spannrichtung verschiebbar, jedoch sind grundsätzlich auch andere Winkelstellungen zwischen der Bewegungsrichtung des Kolbens einerseits und der Spannrichtung andererseits möglich. Darüber hinaus weist der erfindungsgemäße Spannbolzenantrieb ein Keilflächengetriebe mit aufeinander gleitenden Keilflächen auf, um die laterale Bewegung des Kolbens in eine entsprechende axiale Bewegung des Spannbolzens in der Spannrichtung umzusetzen. Das Keilflächengetriebe weist also eine erste Keilfläche an dem lateral verschiebbaren Kolben und eine zweite Keilfläche auf, die auf den Spannbolzen wirkt. Bei einer lateralen Verschiebung des Kolbens gleiten diese beiden Keilflächen aufeinander und führen dadurch zu der gewünschten Bewegung des Spannbolzens.

In dem bevorzugten Ausführungsbeispiel der Erfindung verlaufen die beiden Keilflächen planparallel zueinander, um eine effektive Kraft- und Richtungsumwandlung zu ermöglichen. Hierbei ist zu erwähnen, dass die Keilflächen in der Spannstellung aufeinander gleiten, wohingegen die Keilflächen in der Entspannstellung voneinander beabstandet sein können und einen Spalt einschließen.

Weiterhin ist zu erwähnen, dass die Keilflächen vorzugsweise einen bestimmten Keilwinkel mit der Spannrichtung einschließen, wobei dieser Keilwinkel vorzugsweise im Bereich von 10°-80°, 20°-70°, 30°-65° oder 40°-55° liegt, um nur einige Beispiele zu nennen.

Ferner ist zu erwähnen, dass der lateral verschiebbare Kolben durch verschiedene Antriebsarten angetrieben werden kann. Beispielsweise kann der lateral verschiebbare Kolben elektromotorisch, pneumatisch, hydraulisch oder mechanisch mittels eines Schraubgetriebes angetrieben werden.

Weiterhin ist zu bemerken, dass zumindest eine der Keilflächen mit einer reibungsmindernden und/oder verschleißmindernden Beschichtung versehen werden kann. Beispielsweise eignet sich hierfür eine sogenannte DLC-Beschichtung (DLC: Diamond-like carbon).

Weiterhin besteht im Rahmen der Erfindung die Möglichkeit, dass die Keilflächen des Keilflächengetriebes in einem Ölbad angeordnet sind, um die Reibung und den Verschleiß zu verringern.

Bei einem Spannvorgang wird die Spannbuchse radial aufgeweitet, wie vorstehend bereits beschrieben wurde. In diesem radial aufgeweiteten Zustand besteht die Gefahr, dass Späne oder sonstige Verunreinigungen axial von oben in die aufgeweitete Spannbuchse eindringen und dadurch im Extremfall zu einer Funktionsstörung führen. Dieses Problem ist weniger gravierend, wenn die Spannbuchse in eine oben geschlossene Sackbohrung an dem zu spannenden Werkstück eingeführt wird. Es ist jedoch auch möglich, dass die Werkstückbohrung nicht als Sackbohrung ausgeführt ist, sondern als Durchgangsbohrung, die oben offen ist. Hierbei besteht im gespannten Zustand besonders die Gefahr, dass Späne oder Verunreinigungen von oben durch die Durchgangsbohrung in die aufgeweitete Spannbuchse eindringen. Zur Lösung dieses Problems ist in einer Ausführungsform vorgesehen, dass auf dem freien Ende des Spannbolzens eine Abdeckkappe angebracht ist, wobei die Abdeckkappe vorzugsweise lösbar an dem Spannbolzen angebracht ist. Die Abdeckkappe verschließt den Querschnitt der Werkstückbohrung oberhalb der Spannbuchse elastisch, so dass ein störendes Eindringen von Fremdkörpern aus der Werkstückbohrung in die aufgeweitete Spannbuchse verhindert wird. Beispielsweise kann die Abdeckkappe aus Gummi oder aus einem sonstigen elastischen Kunststoff bestehen, der sich tellerförmig innen an die Innenwand der Werkstückbohrung anschmiegt. Hierbei ist zu erwähnen, dass der erfindungsgemäße Gedanke einer Abdecckappe an dem Spannbolzen auch unabhängig von den anderen Merkmalen des Bohrungsspanners von eigener schutzwürdiger Bedeutung ist. Die Erfindung umfasst deshalb auch einen Spannbolzen mit einer daran angebrachten Abdeckkappe unabhängig von weiteren Merkmalen des Bohrungsspanners.

Es wurde bereits vorstehend erwähnt, dass das Keilflächengetriebe auf den Spannbolzen wirkt und diesen bei einem Spannvorgang aus der Entspannstellung in die Spannstellung drückt. Das Keilflächengetriebe wirkt jedoch vorzugsweise nicht direkt auf den Spannbolzen, sondern indirekt über einen Zugbolzen, der in einem Zylinder des Bohrungsspanners entlang der Spannrichtung verschiebbar ist, wobei der Spannbolzen im montierten Zustand in dem Zugbolzen verankert ist, so dass eine Bewegung des Zugbolzens aus der Entspannstellung in die Spannstellung zu einer entsprechenden und gleichgerichteten Bewegung des Spannbolzens aus der Entspannstellung in die Spannstellung führt.

Die Verankerung des Spannbolzens in dem Zugbolzen kann beispielsweise lösbar mittels eines Bajonettverschlusses erfolgen, was eine leichte Demontage ermöglicht.

Weiterhin ist zu erwähnen, dass der erfindungsgemäße Bohrungsspanner vorzugsweise eine Verdrehsicherung aufweist, die im Betrieb eine Verdrehung des Spannbolzens relativ zu dem Zugbolzen verhindert. So kann die Verdrehsicherung beispielsweise einen Ring aufweisen, von dem zwei gegenüberliegende Stege axial abstehen, wobei die beiden Stege verhindern, dass sich ein hammerförmiger Kopf des Spannbolzens verdrehen kann.

In dem bevorzugten Ausführungsbeispiel der Erfindung weist der Bohrungsspanner zusätzlich eine Rückstelleinrichtung auf, um die radiale Aufweitung der Spannbuchse in der Spannstellung in eine radial zusammengezogene Stellung der Spannbuchse zurückzustellen. Diese Rückstelleinrichtung hat ebenfalls eine eigenständige schutzfähige Bedeutung unabhängig von den anderen Merkmalen des Bohrungsspanners. Die Erfindung umfasst deshalb auch die Rückstelleinrichtung mit den nachstehend beschriebenen Merkmalen unabhängig von den sonstigen Merkmalen des Bohrungsspanners und insbesondere ohne das Keilflächengetriebe.

In einer Erfindungsvariante erfolgt die Rückstellung der Spannbuchse aus der radial aufgeweiteten Spannstellung in die radial zusammengezogene Entspannstellung durch aufeinander gleitende Keilflächen. Hierzu befindet sich an der Unterseite der Spannbuchse außen eine ringförmig umlaufende Keilfläche. Darunter befindet sich ein verschiebbarer Keilring, der an der Oberseite ebenfalls eine ringförmig umlaufende Keilfläche aufweist. Eine axiale Verschiebung dieses Keilrings führt dann aufgrund der aufeinander gleitenden Keilflächen an dem Keilring einerseits und an der Spannbuchse andererseits zu einem radialen Zusammendrücken der Spannbuchse. Zum Verschieben des Keilrings entlang der Spannrichtung können hierbei axial verlaufende Stößel vorgesehen sein, die von dem Zugbolzen verschoben werden oder sogar an den Zugbolzen angeformt sind. Bei einer axialen Bewegung des Zugbolzens aus der Spannstellung in die Entspannstellung drücken diese Stößel dann den Keilring in den Bohrungsspanner nach oben, wodurch die Spannbuchse radial zusammengedrückt wird.

In einer anderen Erfindungsvariante weist die Rückstelleinrichtung für die Spannbuchse dagegen mindestens eine Feder (z.B. Spiralfeder) auf, die mit einer bestimmten Rückstellkraft von außen auf die Spannbuchse drückt. Vorzugsweise ist die Spannrichtung der Feder radial ausgerichtet. Weiterhin ist zu erwähnen, dass die Rückstellkraft beispielsweise mit einer Justierschraube eingestellt werden kann.

In noch einer weiteren Erfindungsvariante weist die Rückstelleinrichtung dagegen erste Nuten in der Mantelfläche des Spannbolzens auf, wobei die ersten Nuten in Längsrichtung verlaufen und jeweils eine Hinterschneidung aufweisen. Hierbei verlaufen in der Spannbuchse zweite Nuten in der Innenfläche der Spannbuchse, wobei die zweiten Nuten in Längsrichtung verlaufen und jeweils eine Hinterschneidung aufweisen. Darüber hinaus weist die Rückstelleinrichtung in dieser Erfindungsvariante Koppelelemente auf, die mit einem Ende in den ersten Nuten und mit dem anderen Ende in den zweiten Nuten verankert sind und darin gleiten, so dass die Koppelelemente eine Zwangsführung der Spannsegmente der Spannbuchse bewirken. Bei einer axialen Relativbewegung zwischen dem Spannbolzen einerseits und der Spannbuchse andererseits kommt es aufgrund der Zwangsführung zu einer entsprechenden Radialbewegung der Spannsegmente der Spannbuchse.

In noch einer weiteren möglichen Erfindungsvariante weist die Rückstelleinrichtung eine andere formschlüssige Verbindung zwischen der Spannbuchse und dem Spannbolzen auf, die ebenfalls eine Zwangsführung in radialer Richtung bewirkt. Beispielsweise kann hierbei eine T-Nut in dem einen Bauteil vorgesehen sein, in der ein entsprechend angepasstes Federelement in dem anderen Bauteil eingreift, um die Zwangsführung zu bewirken.

Gemäß der Erfindung weist der Bohrungsspanner zusätzlich eine pneumatische Stellungsabfrage auf, wobei die pneumatische Stellungsabfrage vorzugsweise mindestens zwei, drei oder vier verschiedene Stellungen des Bohrungsspanners erkennen und unterscheiden kann. Beispielsweise kann die pneumatische Stellungsabfrage folgende Stellungen unterscheiden:
- eine Spannstellung, in der das zu spannende Werkstück gespannt ist,
- eine Entspannstellung, in der die Spannbuchse in die Werkstückbohrung eingeführt und aus der Werkstückbohrung herausgezogen werden kann,
- eine Stellung des Zugbolzens bzw. des Spannbolzens innerhalb eines Spannbereichs, der einen Spannbetrieb zulässt,
- eine durchgespannte Stellung, in der der Zugbolzen vollständig gespannt ist und sich außerhalb des zulässigen Spannbereichs befindet.

Gemäß der Erfindung weist die pneumatische Stellungsabfrage zunächst den bereits vorstehend erwähnten Zugbolzen auf, der in einem Zylinder entlang der Spannrichtung verschiebbar ist. Darüber hinaus umfasst die pneumatische Stellungsabfrage eine erste Druckluftleitung, die an einer ersten Mündungsstelle von der Werkstückseite ausgehend im Wesentlichen axial in den Zylinder mündet, in dem der Zugbolzen verschiebbar ist. In der Entspannstellung verschließt der Zugbolzen dann diese erste Mündungsstelle, was pneumatisch abgefragt werden kann. In der Spannstellung gibt der Zugbolzen dagegen die erste Mündungsstelle frei, was ebenfalls pneumatisch abgefragt werden kann.

Darüber hinaus kann die pneumatische Stellungsabfrage eine zweite Druckluftleitung aufweisen, die an einer zweiten Mündungsstelle im Wesentlichen radial in den Zylinder mündet, in dem der

Zugbolzen entlang der Spannrichtung verschiebbar ist. Darüber hinaus weist die pneumatische Stellungsabfrage bei dieser Bauweise eine Radialbohrung in dem Zugbolzen auf, die in Abhängigkeit von der axialen Stellung des Zugbolzens mehr oder weniger fluchtend über der zweiten Mündungsstelle der zweiten Druckluftleitung liegt. In der Entspannstellung fluchtet die Radialbohrung in dem Zugbolzen dann exakt mit der zweiten Mündungsstelle der zweiten Druckluftleitung, was pneumatisch abgefragt werden kann. Die zweite Mündungsstelle der zweiten Druckluftleitung wird dagegen von der Mantelfläche des Zugbolzens verschlossen, wenn sich der Spannbolzen innerhalb eines zulässigen Spannbereichs befindet, der einen Spannbetrieb zulässt. Auch dies ist pneumatisch abfragbar. Die zweite Mündungsstelle der zweiten Druckluftleitung wird dagegen von dem Zugbolzen wieder freigegeben, wenn der Zugbolzen vollständig durchgespannt ist und sich somit außerhalb des zulässigen Spannbereichs befindet. Auch dieser Zustand lässt sich pneumatisch abfragen. Im Ergebnis können also mittels der zweiten Druckluftleitung drei verschiedene Betriebszustände erkannt und unterschieden werden, nämlich die Entspannstellung, der Betrieb innerhalb des zulässigen Spannbereichs und ein Zustand außerhalb des zuständigen Spannbereichs.

Darüber hinaus kann der Bohrungsspanner auch eine elektrische Stellungabfrage aufweisen, um die Stellung des Zugbolzens abzufragen. Beispielsweise kann hierzu ein induktiver Sensor eingesetzt werden. In dem bevorzugten Ausführungsbeispiel kann die elektrische Stellungsabfrage die Spannstellung, die Entspannstellung eine Stellung des Zugbolzens innerhalb des zulässigen Spannbereichs und/oder die durchgespannte Stellung des Zugbolzens erkennen und unterscheiden.

Mit der elektrischen Stellungsabfrage des Zugbolzens kann der Bohrungsspanner auch den Durchmesser der Spannbuchse berechnen, da die radiale Aufweitung der Spannbuchse durch die axiale Stellung des Spannbolzens und damit auch des Zugbolzens bestimmt wird.

Weiterhin ermöglicht die elektrische Stellungsabfrage auch die Ermittlung der Eindringtiefe, mit der die Spannbuchse in radialer Richtung in die Innenwand der Werkstückbohrung eindringt. Hierbei kann ein Spannkraftsensor verwendet werden, der die Spannkraft misst, die auf den Zugbolzen wirkt. Diese Spannkraft steigt sprunghaft an, wenn die Spannbuchse bei ihrer radialen Aufweitung von innen an die Innenwand der Werkstückbohrung stößt. Der Bohrungsspanner ermittelt dann die axiale Position des Zugbolzens zum Zeitpunkt des sprunghaften Anstiegs der Spannkraft (d.h. beim Kontakt zwischen Spannbuchse und Innenwand der Werkstückbohrung) und auch die Endposition in der Spannstellung. Aus dem Abstand dieser beiden axialen Positionen kann dann die radiale Eindringtiefe der Spannbuchse berechnet werden. Diese Berechnungen können von einer Auswertungseinheit ausgeführt werden, die in den Bohrungsspanner integriert sein kann und eingangsseitig mit der elektrischen Stellungsabfrage und mit dem Spannkraftsensor verbunden sein kann.

Eine bevorzugte Bauform der elektrischen Stellungsabfrage sieht vor, dass der Zugbolzen seitlich eine Schräge aufweist (z.B. eine Fase oder eine Kegelfläche) sowie einen lateral angeordneten Abstandssensor, der seitlich neben dem Zugbolzen angebracht ist und den lateralen Abstand zu der Schräge (z.B. Fase, Kegelfläche) des Zugbolzens misst. Dieser laterale Abstand zwischen dem Abstandssensor einerseits und der Schräge des Zugbolzens andererseits ist dann ein Maß für die axiale Stellung des Zugbolzens entlang der Spannrichtung.

Alternativ kann die axiale Position des Zugbolzens auch über einen parallel zur Achsrichtung des Zugbolzens ausgerichteten Abstandssensor ermittelt werden, der den axialen Abstand zu einer der Stirnflächen des Zugbolzens misst.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Querschnittsansicht durch einen erfindungsgemäßen Bohrungsspanner,

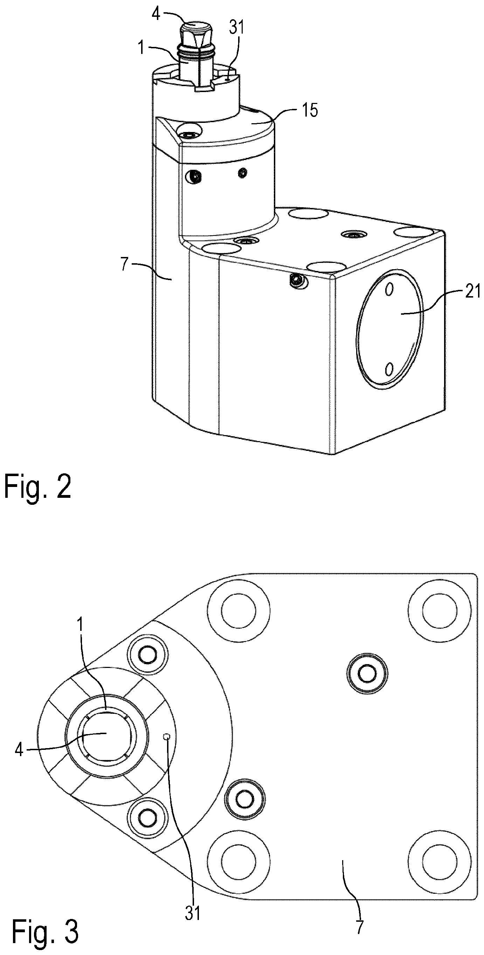

- Figur 2: eine Perspektivansicht des Bohrungsspanners aus Figur 1,
- Figur 3: eine Aufsicht auf den Bohrungsspanner gemäß den Figuren 1 und 2,
- Figur 4A: eine teilweise Querschnittsansicht durch einen erfindungsgemäßen Bohrungsspanner zur Verdeutlichung der pneumatischen Stellungsabfrage,
- Figur 4B: eine vergrößerte Detailansicht aus Figur 4A,
- Figur 5A: eine Querschnittsansicht durch einen erfindungsgemäßen Bohrungsspanner zur Verdeutlichung der pneumatischen Stellungsabfrage,
- Fig. 5B-5E: eine vergrößerte Detaildarstellung des Bohrungsspanners aus Figur 5A in verschiedenen Betriebszuständen,
- Figur 6A: eine teilweise aufgeschnittene Perspektivansicht eines erfindungsgemäßen Bohrungsspanners zur Verdeutlichung der Verdrehsicherung,
- Figur 6B: die Verdrehsicherung des Bohrungsspanners aus Figur 6A,
- Fig. 7A und 7B: eine Abdeckkappe auf dem Spannbolzen des erfindungsgemäßen Bohrungsspanners,
- Fig. 8A und 8B: verschiedene Betriebszustände eines erfindungsgemäßen Bohrungsspanners mit Keilflächen zum radialen Zusammenpressen der Spannbuchse,
- Figur 9: eine Querschnittsansicht durch einen erfindungsgemäßen Bohrungsspanner mit einer radial verlaufenden Spiralfeder zur radialen Komprimierung der Spannbuchse,
- Fig. 10A und 10B: verschiedene Ansichten zur zwangsgeführten Rückstellung der Spannbuchse mittels Koppelelementen,
- Fig. 11A und 11B: verschiedene Ansichten zur zwangsgeführten Rückstellung der Spannbuchse mittels einer T-Nut-Verbindung, sowie
- Figur 12: eine Querschnittsansicht durch einen nicht erfindungsgemäßen Bohrungsspanner mit einem induktiven Abstandssensor zur Stellungsabfrage.

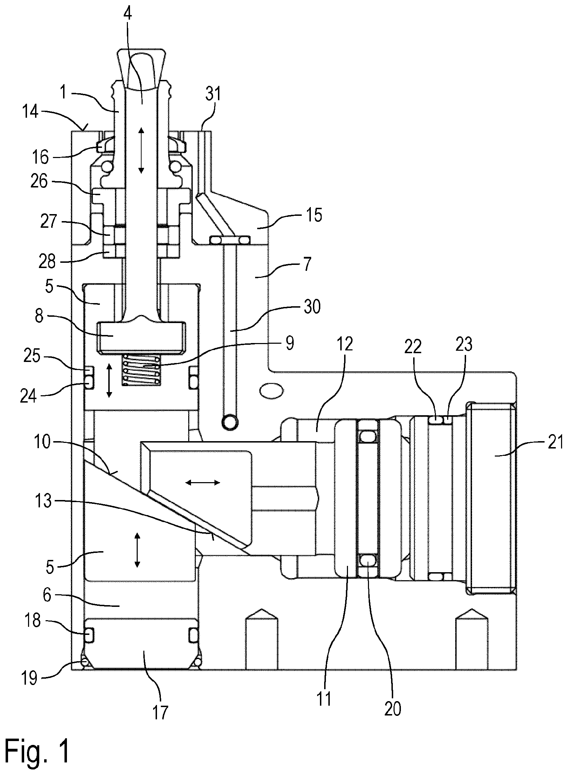

Figur 1 zeigt einen erfindungsgemäßen Bohrungsspanner, der teilweise mit herkömmlichen Bohrungsspannern übereinstimmt, wie sie beispielsweise in EP 3 330 041 B1 beschrieben sind.

So weist der erfindungsgemäße Bohrungsspanner zunächst eine Spannbuchse 1 auf, wobei die Spannbuchse 1 aus mehreren Spannsegmenten besteht, die über den Umfang der Spannbuchse 1 verteilt und jeweils durch Schlitze voneinander getrennt sind. Dadurch ist es möglich, die Spannbuchse 1 in radialer Richtung aufzuweiten, wie noch detailliert beschrieben wird.

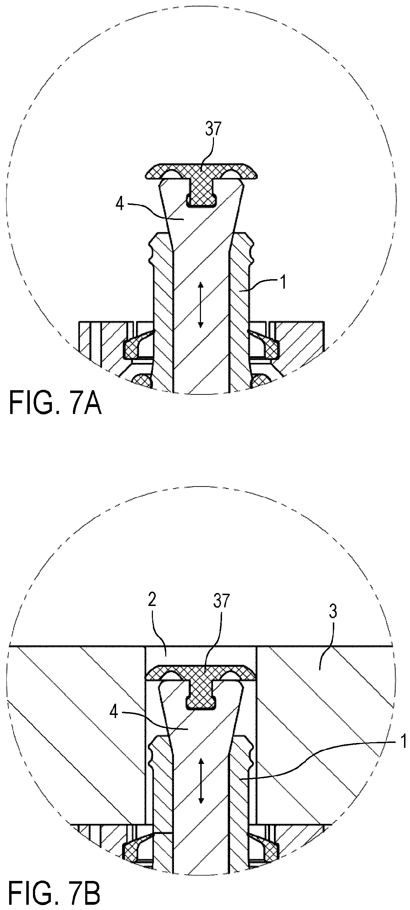

Bei einem Spannvorgang wird die Spannbuchse 1 in eine Werkstückbohrung 2 (vgl. Fig. 7B) in einem zu spannenden Werkstück 3 eingeführt. Dabei befindet sich die Spannbuchse 1 in der Entspannstellung, in der die einzelnen Spannsegmente radial zusammengezogen sind, so dass die Spannbuchse 1 in die Werkstückbohrung 2 eingeführt oder aus der Werkstückbohrung 2 herausgezogen werden kann.

Darüber hinaus weist der dargestellte Bohrungsspanner in herkömmlicher Weise einen Spannbolzen 4 auf, der koaxial in der Spannbuchse 1 verläuft und in Richtung des Doppelpfeils entlang der Spannrichtung verschiebbar ist, wie noch detailliert beschrieben wird. An seinem freien Ende weist der Spannbolzen 4 einen Kopf auf, der sich zu seinem Ende hin konisch erweitert. Bei einer Bewegung des Spannbolzens 4 in proximaler Richtung, d.h. in der Zeichnung nach unten, führt der sich konisch erweiternde Kopf des Spannbolzens 4 dazu, dass die Spannbuchse 1 radial aufgeweitet wird. Bei einer umgekehrten Bewegung des Spannbolzens 4 in distaler Richtung, d.h. in der Zeichnung nach oben, kann sich die Spannbuchse 1 dagegen wieder in radialer Richtung zusammenziehen.

Die Bewegung des Spannbolzens 4 in der Spannrichtung parallel zu dem Doppelpfeil erfolgt durch einen Zugbolzen 5, der in einem Zylinder 6 in einem Gehäuse 7 des Bohrungsspanners entlang der Spannrichtung verschiebbar ist. Der Spannbolzen 4 ist hierbei mittels eines hammerförmigen Kopfs 8 in dem Zugbolzen 5 verankert, wobei der Spannbolzen 4 mittels eines Bajonettverschlusses von dem Zugbolzen 5 gelöst werden kann. Zwischen dem hammerförmigen Kopf 8 und dem Zugbolzen 5 befindet sich hierbei eine Druckfeder 9.

Der Zugbolzen 5 ist seitlich offen und hat in diesem Bereich eine geneigte Keilfläche 10 zum Antrieb des Zugbolzens 5 und damit auch des Spannbolzens 4 mittels eines Keilflächengetriebes.

Darüber hinaus umfasst das Keilflächengetriebe auch einen Kolben 11, der in lateraler Richtung rechtwinklig zu der Spannvorrichtung in einem Zylinder 12 verschiebbar ist. Der Kolben 11 weist an seiner in der Zeichnung linken Seite ebenfalls eine geneigte Keilfläche 13 auf, wobei die beiden Keilflächen 10, 13 planparallel zueinander ausgerichtet sind und aufeinander gleiten.

Bei einer Bewegung des Kolbens 11 in der Zeichnung von rechts nach links führt das Keilflächengetriebe also zu einer Abwärtsbewegung des Zugbolzens 5 und damit auch des Spannbolzens 4.

Bei einer Seitwärtsbewegung des Kolbens 11 in der Zeichnung von links nach rechts kann der Zugbolzen 5 dagegen wieder nach oben bewegt werden, so dass sich der Zugbolzen 5 und damit auch der Spannbolzen 4 aus der Spannstellung in die Entspannstellung bewegen können.

Das Keilflächengetriebe ermöglicht also sowohl eine Kraftumsetzung als auch eine Richtungsumsetzung. Die Richtungsumsetzung durch das Keilflächengetriebe ist hierbei vorteilhaft, weil die in der Zeichnung dargestellte andere Bauweise ermöglicht wird.

Im gespannten Zustand wird das Werkstück 3 auf eine Werkstückauflage 14 gezogen, die sich an der Oberseite einer Werkstückauflagebuchse 15 befindet.

Die Spannbuchse 1 ist hierbei ringförmig von einem Dichtring 16 umgegeben, was an sich aus dem Stand der Technik bekannt ist.

An der Unterseite des Bohrungsspanners ist der Zylinder 6 von einer Buchse 17 verschlossen, wobei die Buchse 17 von einem O-Ring 18 abgedichtet und von einem Sprengring 19 fixiert wird.

Der Kolben 11 enthält wiederum eine Kolbendichtung 20. Weiterhin ist zu erwähnen, dass der lateral ausgerichtete Zylinder 12 für den Kolben 11 durch eine Gewindebuchse 21 verschlossen ist, wobei die Gewindebuchse 21 wiederum von einem O-Ring 22 und einem Stützring 23 umgeben ist.

Darüber hinaus ist auch der Zugbolzen 5 von einem O-Ring 24 und einem Stützring 25 umgeben.

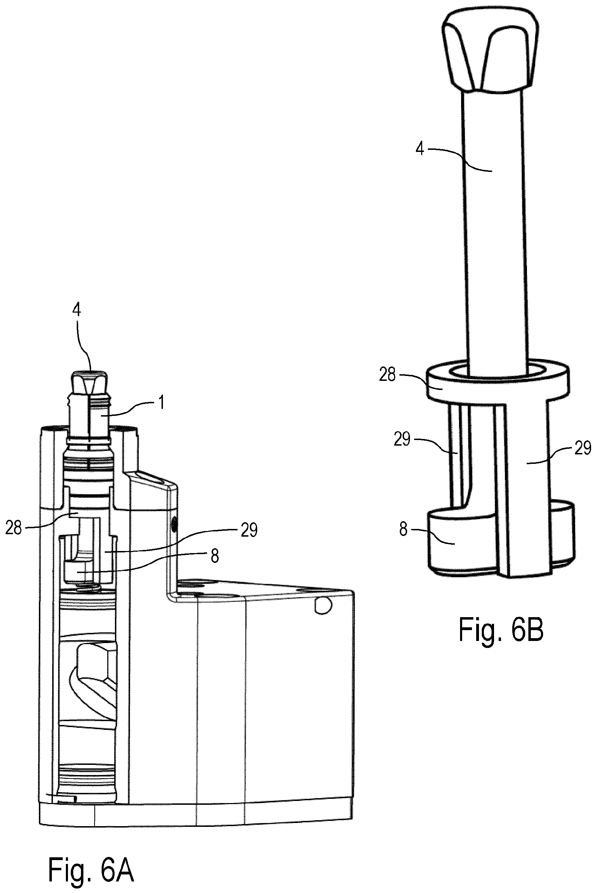

Darüber hinaus zeigt Figur 1 eine Niederzugscheibe 26, einen Druckring 27 und eine Verdrehsicherung 28, wobei die Verdrehsicherung 28 in den Figuren 6A und 6B dargestellt ist. So besteht die Verdrehsicherung 28 im Wesentlichen aus einem Ring, von dem axial zwei Stege 29 abstehen, die eine Verdrehung des hammerförmigen Kopfs 8 des Spannbolzens 4 verhindern, wie insbesondere aus Figur 6B ersichtlich ist.

Darüber hinaus zeigt Figur 1 eine Druckluftleitung 30 zur pneumatischen Zustandsabfrage, wobei die Druckluftleitung 30 in der Werkstückauflage 14 an einer Mündungsstelle 31 ausmündet. Im gespannten Zustand liegt das zu spannende Werkstück 3 an der Mündungsstelle 31 auf der Werkstückauflage 14 auf und verschließt dadurch die Mündungsöffnung der Druckluftleitung 30, was eine pneumatische Abfrage ermöglicht.

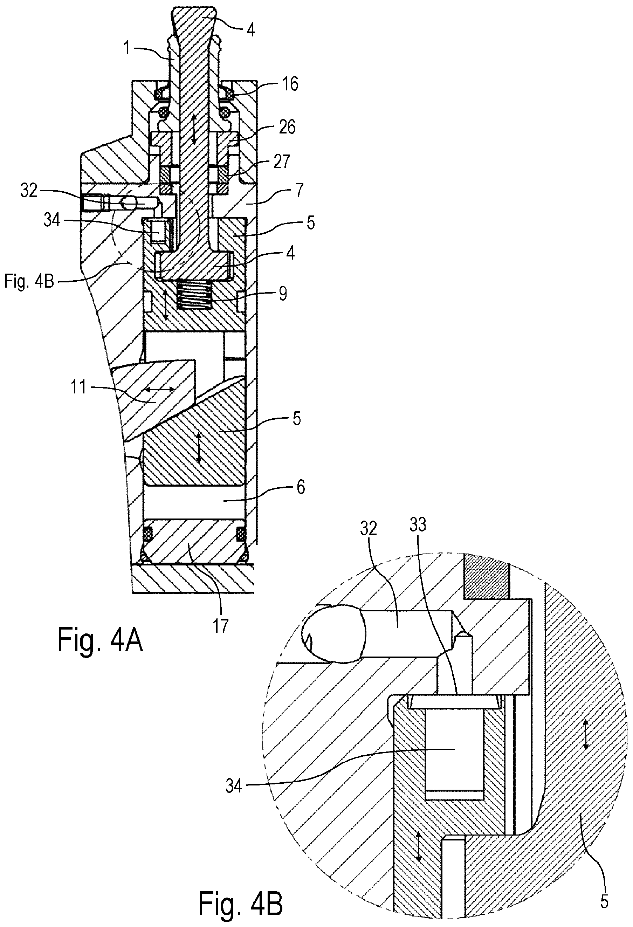

Darüber hinaus umfasst die pneumatische Stellungsabfrage eine weitere Druckluftleitung 32, die in den Figuren 4A und 4B dargestellt ist. So mündet die Druckluftleitung 32 an einer Mündungsstelle 33 axial von oben in den Zylinder 6 für den Zugbolzen 5. In dem Zugbolzen 5 befindet sich an der Oberseite an dieser Stelle ein Dichtelement 34. In der in Figur 4B gezeigten Entspannstellung verschließt der Zugbolzen 5 mit dem Dichtelement 34 die Mündungsstelle 33 der Druckluftleitung 32, was eine pneumatische Abfrage ermöglicht. In der nach unten gezogenen Spannstellung gibt der Zugbolzen 5 dagegen die Mündungsstelle 33 der Druckluftleitung 32 frei, was eine pneumatische Abfrage ermöglicht.

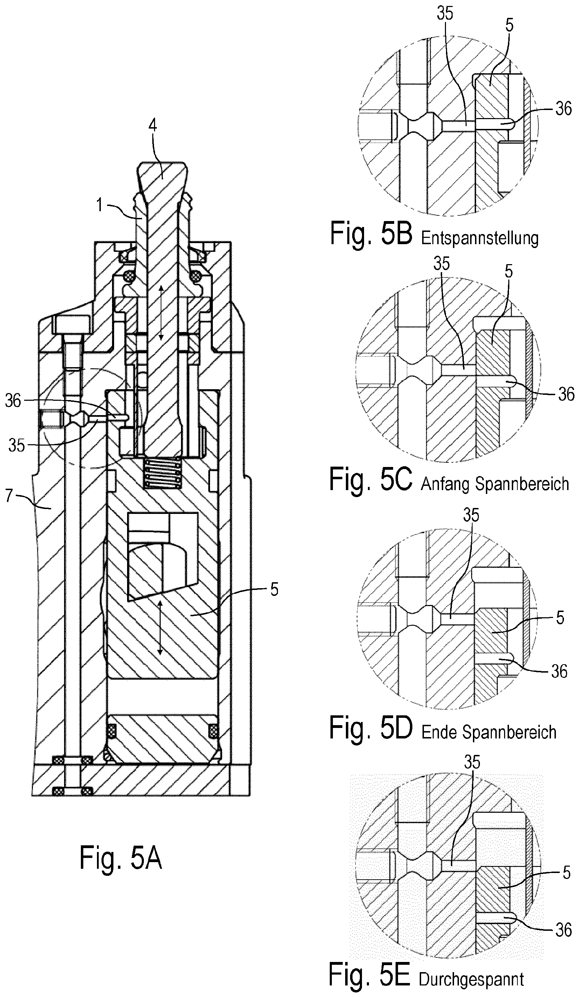

Die Figuren 5A-5E zeigen eine weitere Druckluftleitung 35 zur pneumatischen Stellungsabfrage. Darüber hinaus ist in dem Zugbolzen 5 eine radial verlaufende Durchgangsbohrung 36 angeordnet, die radial verläuft und in Abhängigkeit von der axialen Stellung des Zugbolzens 5 mehr oder weniger oder gar nicht mit der Druckluftleitung 35 fluchtet, was eine pneumatische Stellungsabfrage ermöglicht.

So zeigt Figur 5B den Zugbolzen 5 in seiner oberen Entspannstellung. In dieser Entspannstellung fluchtet die Druckluftleitung 35 mit der Durchgangsbohrung 36 in dem Zugbolzen 5.

Figur 5C zeigt den Zugbolzen 5 dagegen am Anfang des Spannbereichs, wobei die Durchgangsbohrung 36 in dem Zugbolzen 5 dann nicht mit der Druckluftleitung 35 fluchtet. In diesem Zustand wird die Druckluftleitung 35 also von der Mantelfläche des Zugbolzens 5 verschlossen.

Figur 5D zeigt dagegen das Ende des Spannbereichs, wenn der Zugbolzen 5 bereits weit nach unten gezogen ist, aber trotzdem noch mit seiner Mantelfläche die Mündungsöffnung der Druckluftleitung 35 verschließt.

Schließlich zeigt Figur 5E den durchgespannten Zustand des Zugbolzens 5, wenn sich der Zugbolzen 5 ganz unten befindet. In diesem Zustand gibt der Zugbolzen 5 die Mündungsöffnung der Druckluftleitung 35 frei, was eine pneumatische Abfrage ermöglicht.

Die Figuren 7A und 7B zeigen zusätzlich eine elastische Abdeckkappe 37, die lösbar auf dem freien Ende des Spannbolzens 4 befestigt ist. Die Abdeckkappe 37 ist elastisch und tellerförmig und verschließt in dem Zustand gemäß Figur 7B den Querschnitt der Werkstückbohrung 2. Dadurch wird verhindert, dass Fremdkörper von oben nach unten in die aufgeweitete Spannbuchse 1 eindringen können.

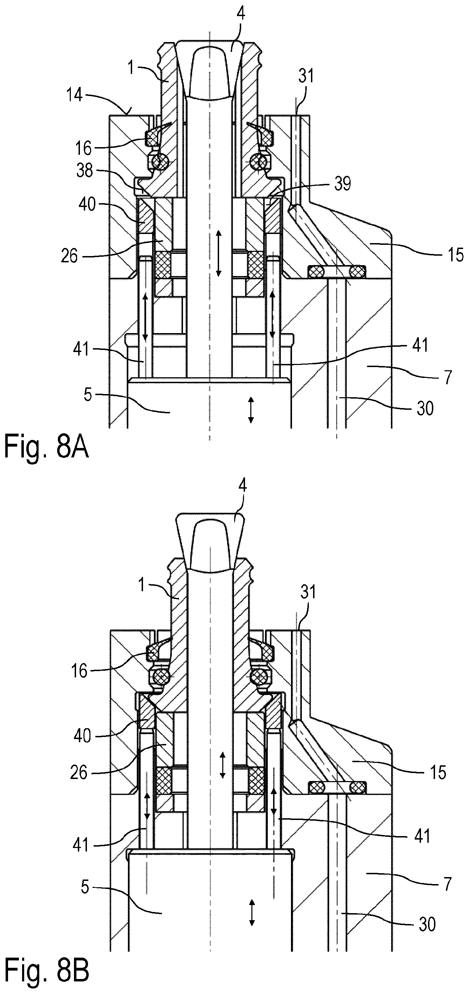

Die Figuren 8A und 8B zeigen eine Variante des vorstehend beschriebenen erfindungsgemäßen Bohrungsspanners, so dass zur Vermeidung von Wiederholungen auf die vorstehende Beschreibung verwiesen wird, wobei für entsprechende Einzelheiten dieselben Bezugszeichen verwendet werden.

In dieser Variante weist der Bohrungsspanner eine Rückstelleinrichtung auf, um die Spannbuchse 1 nach einer radialen Aufweitung in der Spannstellung wieder radial zusammenzudrücken, wenn sich der Bohrungsspanner wieder in der Entspannstellung befindet.

Hierzu weist die Spannbuchse 1 an ihrer Unterseite eine ringförmig umlaufende Keilfläche 38 auf, die von oben auf eine entsprechende Keilfläche 39 drückt, die sich in der Oberseite eines Keilrings 40 befindet. Aufgrund des Aufeinandergleitens der Keilflächen 38, 39 wird die Spannbuchse 1 also radial zusammengedrückt, wenn sich der Keilring 40 nach oben bewegt.

Hierzu sind axial verlaufende Stößel 41 vorgesehen, die von dem Zugbolzen 5 nach oben gedrückt werden, wenn sich der Zugbolzen 5 aus der Spannstellung nach oben in die Entspannstellung bewegt.

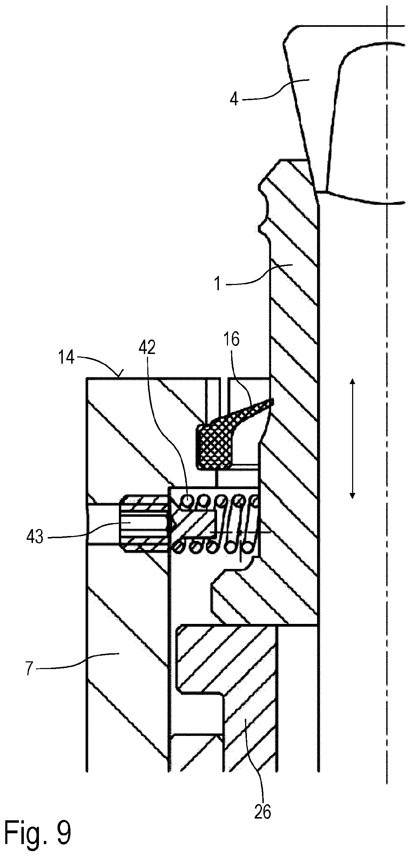

Figur 9 zeigt eine andere mögliche Bauweise einer solchen Rückstelleinrichtung zum radialen Zusammendrücken der Spannbuchse 1.

Hierzu weist die Rückstelleinrichtung in diesem Ausführungsbeispiel eine Spiralfeder 42 auf, die sich innen an dem Gehäuse 7 des Bohrungsspanners abstützt und radial nach innen auf die Spannbuchse 1 drückt. Die Rückstellkraft kann hierbei durch eine Justierschraube 43 eingestellt werden.

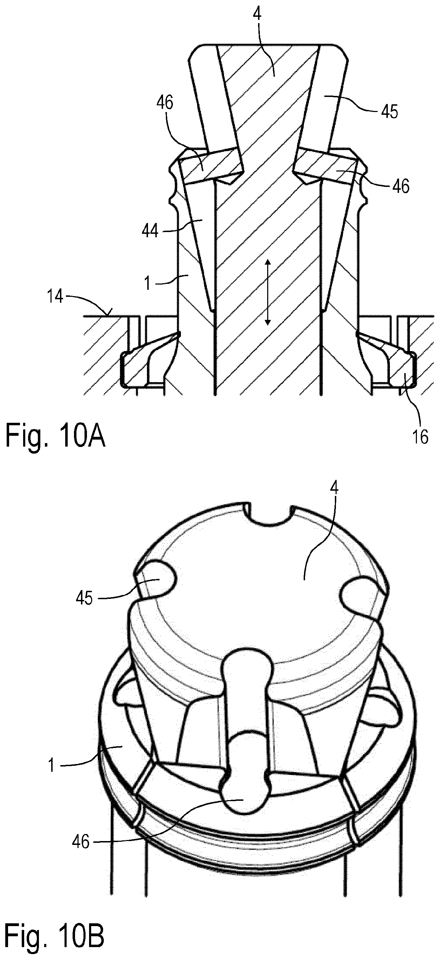

Die Figuren 10A und 10B zeigen eine andere mögliche Bauform für eine Rückstelleinrichtung zur radialen Komprimierung der Spannbuchse 1.

Hierzu weist die Spannbuchse 1 in Axialrichtung verlaufende Nuten 44 auf, die in Deckung über entsprechenden Nuten 45 in der Mantelfläche des Spannbolzens 4 verlaufen. In den Nuten 44, 45 gleiten stabförmige Koppelelemente 46, wobei die Koppelelemente 46 in den Hinterschneidungen der Nuten 44, 45 verankert sind und deshalb aus den Nuten 44, 45 nicht herausgleiten können. Auf diese Weise bewirken die Koppelelemente 46 eine radiale Zwangsführung der Spannbuchse 1 relativ zu dem Spannbolzen 4. Dies hat zur Folge, dass die Spannbuchse 1 automatisch radial komprimiert wird, wenn sich der Spannbolzen 4 aus seiner Spannstellung in die Entspannstellung bewegt.

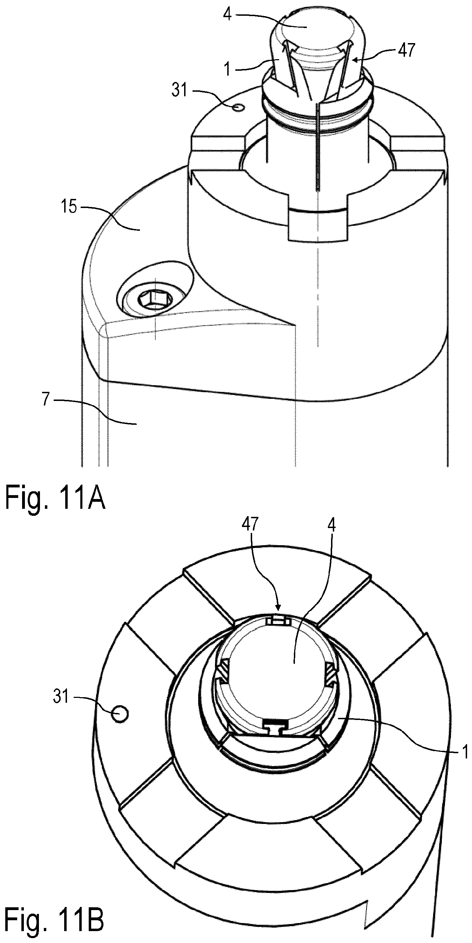

Die Figuren 11A und 11B zeigen ein weiteres mögliches Ausführungsbeispiel einer Rückstelleinrichtung zur radialen Komprimierung der Spannbuchse 1 in der entspannten Stellung. Hierzu ist eine T-Nut-Verbindung 47 zwischen den Spannsegmenten der Spannbuchse 1 einerseits und dem Spannbolzen 4 andererseits vorgesehen, wobei die T-Nut-Verbindung 47 ebenfalls eine Zwangsführung bewirkt.

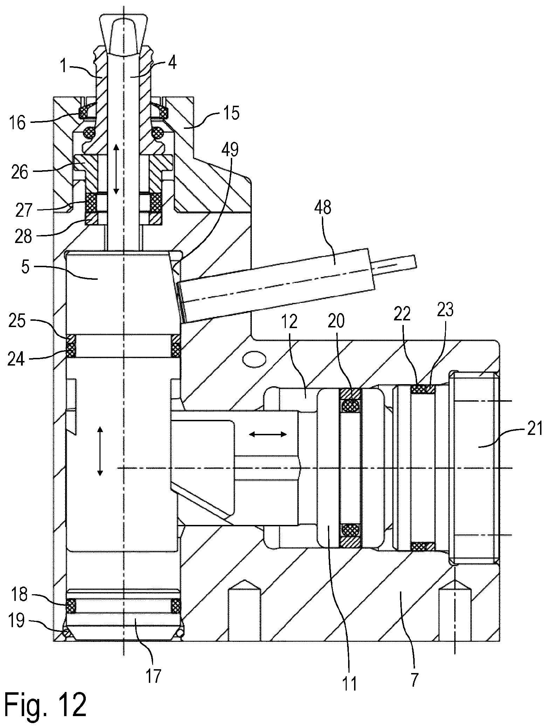

Figur 12 zeigt schließlich eine Querschnittsansicht einer abgewandelten Ausführungsform eines nicht erfindungsgemäßen Bohrungsspanners mit einem induktiven Abstandssensor 48, der seitlich angeordnet ist und den Abstand zu einer Fase 49 an dem Zugbolzen 5 misst. Der laterale Abstand zwischen dem induktiven Abstandssensor 48 einerseits und der Fase 49 an dem Zugbolzen 5 andererseits ist dann ein Maß für die axiale Stellung des Zugbolzens 5 entlang der Spannrichtung.

### Bezugszeichenliste:

- 1: Spannbuchse
- 2: Werkstückbohrung
- 3: Werkstück
- 4: Spannbolzen
- 5: Zugbolzen
- 6: Zylinder für Zugbolzen
- 7: Gehäuse des Bohrungsspanners
- 8: Hammerförmiger Kopf des Spannbolzens
- 9: Druckfeder
- 10: Keilfläche des Zugbolzens
- 11: Kolben
- 12: Zylinder für Kolben 11
- 13: Keilflächen an dem Kolben 11
- 14: Werkstückauflage
- 15: Werkstückauflagebuchse
- 16: Dichtring
- 17: Buchse
- 18: O-Ring
- 19: Sprengring
- 20: Kolbendichtung
- 21: Gewindebuchse
- 22: O-Ring
- 23: Stützring
- 24: O-Ring
- 25: Stützring
- 26: Niederzugscheibe
- 27: Druckring
- 28: Verdrehsicherung
- 29: Stege der Verdrehsicherung
- 30: Druckluftleitung zur pneumatischen Stellungsabfrage
- 31: Mündungsstelle der Druckluftleitung in der Werkstückauflage
- 32: Druckluftleitung zur pneumatischen Stellungsabfrage
- 33: Mündungsstelle der Druckluftleitung in den Zylinder des Zugbolzens
- 34: Dichtelement in dem Zugbolzen
- 35: Druckluftleitung zur pneumatischen Stellungsabfrage
- 36: Radiale Durchgangsbohrung in dem Zugbolzen
- 37: Abdeckkappe auf dem Ende des Spannbolzens
- 38: Keilfläche an der Unterseite der Spannbuchse
- 39: Keilfläche des Keilrings
- 40: Keilrings
- 41: Stößel
- 42: Spiralfeder
- 43: Justierschraube zur Justierung der Rückstellkraft
- 44: Nuten in der Spannbuchse
- 45: Nuten in dem Spannbolzen
- 46: Koppelelemente
- 47: T-Nut-Verbindung
- 48: Induktiver Abstandssensor
- 49: Fase an dem Zugbolzen

## Patentansprüche

1. Bohrungsspanner zum Spannen eines Werkstücks (3) mit einer in dem Werkstück (3) befindlichen Werkstückbohrung (2), mit
a) einer Spannbuchse (1) zum Eingreifen in die Werkstückbohrung (2), wobei die Spannbuchse (1) radial aufweitbar ist, vorzugsweise mit mehreren getrennten Spannsegmenten, die über den Umfang der Spannbuchse (1) verteilt angeordnet sind,
b) einem Spannbolzen (4), der koaxial durch die Spannbuchse (1) verläuft und in einer Spannrichtung zwischen einer Spannstellung und einer Entspannstellung axial verschiebbar ist,
b1) wobei der Spannbolzen (4) die Spannbuchse (1) in der Spannstellung radial aufweitet, um die Spannbuchse (1) in der Werkstückbohrung (2) zu spannen,
b2) wohingegen der Spannbolzen (4) die Spannbuchse (1) in der Entspannstellung nicht radial aufweitet, damit die Spannbuchse (1) in die Werkstückbohrung (2) eingeführt oder aus der Werkstückbohrung (2) herausgezogen werden kann,
c) einem Spannbolzenantrieb (5, 6, 10-13) zum axialen Verschieben des Spannbolzens (4) in der Spannrichtung in die Spannstellung, und
d) einer pneumatischen Stellungsabfrage (30-36) zur pneumatischen Erkennung der Spannstellung und der Entspannstellung,
**dadurch gekennzeichnet,**
e) **dass** der Spannbolzenantrieb (5, 6, 10-13) folgendes aufweist:
e1) einen bezüglich der Spannrichtung lateral verschiebbaren Kolben (11) und
e2) ein Keilflächengetriebe (10, 13) mit aufeinander gleitenden Keilflächen (10, 13) zur Umsetzung der lateralen Bewegung des Kolbens (11) in eine entsprechende axiale Bewegung des Spannbolzens (4) in der Spannrichtung, und
f) **dass** die pneumatische Stellungsabfrage folgendes aufweist:
f1) den Zugbolzen (5),
f2) den Zylinder (6), in dem der Zugbolzen (5) entlang der Spannrichtung verschiebbar ist,
f3) eine erste Druckluftleitung (32), die an einer ersten Mündungsstelle (33) von der Werkstückseite im Wesentlichen axial in den Zylinder (6) mündet,
• wobei die erste Mündungsstelle (33) der ersten Druckluftleitung (32) in der Entspannstellung von dem Zugbolzen (5) verschlossen wird,
• wohingegen die erste Mündungsstelle (33) der ersten Druckluftleitung (32) in der Spannstellung von dem Zugbolzen (5) freigegeben wird.

2. Bohrungsspanner nach Anspruch 1, **dadurch gekennzeichnet, dass** der Spannbolzenantrieb (5, 6, 10-13) den Kolben mittels einer der folgenden Antriebsarten antreibt:
a) elektromotorisch,
b) pneumatisch,
c) hydraulisch oder
d) mechanisch mittels eines Schraubgetriebes.

3. Bohrungsspanner nach einem der vorhergehenden Ansprüche, **dadurch gekennzeichnet,**
a) **dass** zumindest eine der Keilflächen (10, 13) mit einer reibungsmindernden und/oder verschleißmindernden Beschichtung versehen ist, insbesondere mit einer DLC-Beschichtung, und/oder
b) **dass** die Keilflächen (10, 13) in einem Ölbad angeordnet sind.

4. Bohrungsspanner nach einem der vorhergehenden Ansprüche,
**dadurch gekennzeichnet,**
a) **dass** auf dem freien Ende des Spannbolzens (4) eine Abdeckkappe (37) angebracht ist, wobei die Abdeckkappe (37) vorzugsweise lösbar an dem Spannbolzen (4) angebracht ist, und
b) **dass** die Abdeckkappe (37) den Querschnitt der Werkstückbohrung (2) elastisch verschließt und dadurch bei einer oben offenen Werkstückbohrung (2) ein Eindringen von Fremdkörpern aus der Werkstückbohrung (2) in die in der Spannstellung aufgeweitete Spannbuchse (1) verhindert.

5. Bohrungsspanner nach einem der vorhergehenden Ansprüche,
**dadurch gekennzeichnet, dass** der Spannbolzenantrieb folgendes aufweist:
a) einen Zugbolzen (5), der von dem Keilflächengetriebe (10, 13) in einem Zylinder (6) in der Spannrichtung verschoben wird,
b) einen Bajonettverschluss zur lösbaren Verankerung des Spannbolzens (4) in dem Zugbolzen (5), und/oder
c) eine Verdrehsicherung (28, 29), die im Betrieb eine Verdrehung des Spannbolzens (4) relativ zu dem Zugbolzen (5) verhindert.

6. Bohrungsspanner nach einem der vorhergehenden Ansprüche, **gekennzeichnet durch** eine Rückstelleinrichtung (38-47) zur Rückstellung der radialen Aufweitung der Spannbuchse (1) in der Spannstellung in eine radial zusammengezogene Stellung der Spannbuchse (1) in der Entspannstellung.

7. Bohrungsspanner nach Anspruch 6, **dadurch gekennzeichnet, dass** die Rückstelleinrichtung (38-47) folgendes aufweist:
a) eine umlaufende Keilfläche (38) an der Unterseite der Spannbuchse (1) und einen Keilring (40) an der Unterseite der Spannbuchse (1) mit einer umlaufenden Keilfläche (39) an seiner Oberseite, wobei die Keilflächen (38, 39) des Keilrings (40) einerseits und der Spannbuchse (1) andererseits aufeinander gleiten, sowie mindestens einen axial verlaufenden Stößel (41), der einerseits mit dem Zugbolzen (5) verbunden ist und andererseits gegen den Keilring (40) drückt, so dass der Keilring (40) die Spannbuchse (1) in der Entspannstellung radial zusammendrückt, oder
b) mindestens eine Feder (42), insbesondere eine Spiralfeder (42), die mit einer bestimmten Rückstellkraft von außen im Wesentlichen radial auf die Spannbuchse (1) drückt, wobei die Rückstellkraft vorzugsweise mit einer Justierschraube (43) einstellbar ist, oder
c) erste Nuten (45) in der Mantelfläche des Spannbolzens (4), wobei die ersten Nuten (45) in Längsrichtung verlaufen und jeweils eine Hinterschneidung aufweisen, und zweite Nuten (44) in der Innenfläche der Spannbuchse (1), wobei die zweiten Nuten (44) in Längsrichtung verlaufen und jeweils eine Hinterschneidung aufweisen, und Koppelelemente (46), die einerseits in den ersten Nuten (45) und andererseits in den zweiten Nuten (44) gleiten, so dass die Koppelelemente (46) die Spannbuchse (1) zwangsgeführt radial zusammenziehen, wenn der Spannbolzen (4) aus der Spannstellung in die Entspannstellung bewegt wird.

8. Bohrungsspanner nach Anspruch 6, **dadurch gekennzeichnet, dass** die Rückstelleinrichtung (38-47) eine formschlüssige Verbindung (47) zwischen der Spannbuchse (1) und dem Spannbolzen (4) aufweist, insbesondere mit einer T-Nut, so dass die formschlüssige Verbindung (47) die Spannbuchse (1) zwangsgeführt radial zusammenzieht, wenn der Spannbolzen (4) aus der Spannstellung in die Entspannstellung bewegt wird.

9. Bohrungsspanner nach einem der vorhergehenden Ansprüche, **dadurch gekennzeichnet, dass** die pneumatische Stellungsabfrage (30-36) ausgebildet ist zur Erkennung mindestens einer der folgenden Stellungen des Zugbolzens (5):
a) die Spannstellung,
b) die Entspannstellung,
c) eine Stellung des Zugbolzens (5) innerhalb eines Spannbereichs, der einen Spannbetrieb zulässt,
d) eine durchgespannte Stellung, in der der Zugbolzen (5) gespannt ist und sich außerhalb des Spannbereichs befindet.

10. Bohrungsspanner nach einem der vorhergehenden Ansprüche, **dadurch gekennzeichnet, dass** die pneumatische Stellungsabfrage folgendes aufweist:
a) den Zugbolzen (5),
b) den Zylinder (6), in dem der Zugbolzen (5) entlang der Spannrichtung verschiebbar ist.
c) eine zweite Druckluftleitung (35), die an einer zweiten Mündungsstelle im Wesentlichen radial in den Zylinder (6) mündet,
d) eine Radialbohrung (36) in dem Zugbolzen (5),
d1) wobei die Radialbohrung (36) des Zugbolzens (5) in der Entspannstellung mit der zweiten Mündungsstelle der zweiten Druckluftleitung (35) fluchtet,
d2) wohingegen die zweite Mündungsstelle der zweiten Druckluftleitung (35) von der Mantelfläche des Zugbolzens (5) verschlossen wird, wenn sich der Spannbolzen (4) entlang der Spannrichtung innerhalb eines Spannbereichs befindet, der einen Spannbetrieb zulässt,
d3) während die zweite Mündungsstelle der zweiten Druckluftleitung (35) von dem Zugbolzen (5) freigegeben wird, wenn der Spannbolzen (4) durchgespannt ist und sich somit außerhalb des Spannbereichs befindet.

11. Bohrungsspanner nach einem der vorhergehenden Ansprüche, **gekennzeichnet durch eine** elektrische Stellungsabfrage (48, 49) zur Abfrage der Stellung des Zugbolzens (5), insbesondere zur Erkennung mindestens einer der folgenden Stellungen des Zugbolzens (5):
a) die Spannstellung,
b) die Entspannstellung,
c) eine Stellung des Zugbolzens (5) innerhalb eines Spannbereichs, der einen Spannbetrieb zulässt,
d) eine durchgespannte Stellung, in der der Zugbolzen (5) gespannt ist und sich außerhalb des Spannbereichs befindet.

12. Bohrungsspanner nach Anspruch 11, **dadurch gekennzeichnet,**
a) **dass** die elektrische Stellungsabfrage die axiale Position des Zugbolzens (5) entlang der Spannrichtung als quantitative Größe ermittelt, und
b) **dass** die elektrische Stellungsabfrage aus der axialen Position des Zugbolzens (5) den Durchmesser der Spannbuchse (1) berechnet.

13. Bohrungsspanner nach einem der Ansprüche 11 bis 12, **dadurch gekennzeichnet,**
a) **dass** der Bohrungsspanner einen Kraftsensor aufweist, der die Spannkraft misst, die bei einem Spannvorgang auf den Zugbolzen (5) wirkt,
b) **dass** die auf den Zugbolzen (5) wirkende Spannkraft einen Kraftanstieg zeigt, wenn die Spannbuchse (1) bei ihrer radialen Aufweitung gegen die Innenwand der Werkstückbohrung (2) stößt,
c) **dass** der Bohrungsspanner die axiale Position des Zugbolzens (5) zum Zeitpunkt des Kraftanstiegs ermittelt,
d) **dass** der Bohrungsspanner die axiale Position des Zugbolzens (5) in der Spannstellung ermittelt, und
e) **dass** der Bohrungsspanner die radiale Eindringtiefe ermittelt, mit der die Spannbuchse (1) in radialer Richtung in die Innenwand der Werkstückbohrung (2) eindringt und zwar aus
e1) der axialen Position des Zugbolzens (5) zum Zeitpunkt des Kraftanstiegs und
e2) der axialen Position des Zugbolzens (5) in der Spannstellung.

14. Bohrungsspanner nach einem der Ansprüche 11 bis 12, **dadurch gekennzeichnet, dass** die elektrische Stellungsabfrage (48, 49) folgendes aufweist:
a) eine Schräge (49) an dem Zugbolzen (5), insbesondere als Fase oder Kegelfläche, und
b) einen Abstandssensor (48), insbesondere einen induktiven Abstandssensor (48), der seitlich neben dem Zugbolzen (5) angebracht ist und den lateralen Abstand zu der Schräge (49) des Zugbolzens (5) misst, wobei der laterale Abstand zwischen dem Abstandssensor (48) und der Schräge (49) des Zugbolzens (5) ein Maß für die axiale Stellung des Zugbolzens (5) entlang der Spannrichtung ist.

## Claims

1. Bore clamp for clamping a workpiece (3) comprising a workpiece bore (2) located in the workpiece (3), with
a) a clamping bush (1) for engaging in the workpiece bore (2), the clamping bush (1) being radially expandable, preferably with several separate clamping segments which are arranged distributed over the circumference of the clamping bush (1),
b) a clamping bolt (4) which extends coaxially through the clamping bush (1) and is axially displaceable in a clamping direction between a clamping position and an unclamping position,
b1) where the clamping bolt (4) radially expands the clamping bush (1) in the clamping position in order to clamp the clamping bush (1) in the workpiece bore (2),
b2) whereas the clamping bolt (4) does not radially expand the clamping bush (1) in the unclamping position so that the clamping bush (1) can be inserted into the workpiece bore (2) or pulled out of the workpiece bore (2),
c) a clamping bolt drive (5, 6, 10-13) for axial displacement of the clamping bolt (4) in the clamping direction into the clamping position, and
d) a pneumatic position sensing (30-36) for pneumatic detection of the clamping position and the unclamping position,
**characterized in**
e) **that** the clamping bolt drive (5, 6, 10-13) comprises the following:
e1) a piston (11) laterally displaceable with respect to the clamping direction, and
e2) a wedge gear (10, 13) with wedge faces (10, 13) sliding on one another for converting the lateral movement of the piston (11) into a corresponding axial movement of the clamping bolt (4) in the clamping direction, and
f) **that** the pneumatic position sensing comprises the following:
f1) the tension bolt (5),
f2) the cylinder (6) in which the tension bolt (5) is displaceable along the clamping direction,
f3) a first compressed air line (32) which opens into the cylinder (6) substantially axially at a first opening (33) from the workpiece side,
• wherein the first opening (33) of the first compressed air line (32) is closed by the tension bolt (5) in the unclamping position, in particular by means of a sealing element (34) in the tension bolt (5),
• whereas the first opening (33) of the first compressed air line (32) is released by the tension bolt (5) in the clamping position.

2. Bore clamp according to claim 1, **characterized in that** the clamping bolt drive (5, 6, 10-13) drives the piston by means of one of the following drive types:
a) electromotive,
b) pneumatically,
c) hydraulically or
d) mechanically by means of a screw gear.

3. Bore clamp according to one of the preceding claims, **characterized in**
a) **that** at least one of the wedge surfaces (10, 13) is provided with a friction-reducing and/or wear-reducing coating, in particular with a DLC coating, and/or
b) **that** the wedge surfaces (10, 13) are arranged in an oil bath.

4. Bore clamp according to one of the preceding claims, **characterized in**
a) **that** a cover cap (37) is mounted on the free end of the clamping bolt (4), the cover cap (37) preferably being detachably mounted on the clamping bolt (4), and
b) **that** the cover cap (37) elastically closes the cross-section of the workpiece bore (2) and thereby prevents foreign bodies from the workpiece bore (2) from penetrating into the clamping bush (1), which is expanded in the clamping position, when the workpiece bore (2) is open at the top.

5. Bore clamp according to one of the preceding claims, **characterized in that** the clamping bolt drive comprises:
a) a tension bolt (5) which is displaced in the clamping direction by the wedge gear (10, 13) in a cylinder (6),
b) a bayonet lock for releasable anchoring of the tension bolt (4) in the tension bolt (5), and/or
c) an anti-rotation device (28, 29) which prevents rotation of the clamping bolt (4) relative to the tension bolt (5) during operation.

6. Bore clamp according to one of the preceding claims, **characterized by** a reset device (38-47) for resetting the radial expansion of the clamping bush (1) in the clamping position into a radially contracted position of the clamping bush (1) in the unclamping position.

7. Bore clamp according to claim 6, **characterized in that** the reset device (38-47) comprises:
a) a circumferential wedge surface (38) on the underside of the clamping bush (1) and a wedge ring (40) on the underside of the clamping bush (1) with a circumferential wedge surface (39) on its upper side, the wedge surfaces (38, 39) of the wedge ring (40) on the one hand and of the clamping bush (1) on the other hand sliding on one another, and at least one axially extending plunger (41) which, on the one hand, is connected to the tension bolt (5) and, on the other hand, presses against the wedge ring (40), so that the wedge ring (40) radially compresses the clamping bush (1) in the unclamping position, or
b) at least one spring (42), in particular a spiral spring (42), which presses substantially radially on the clamping bush (1) from the outside with a certain resetting force, the resetting force preferably being adjustable with an adjusting screw (43), or
c) first grooves (45) in the lateral surface of the clamping bolt (4), the first grooves (45) extending in the longitudinal direction and each having an undercut, and second grooves (44) in the inner surface of the clamping bush (1), the second grooves (44) running in the longitudinal direction and each having an undercut, and coupling elements (46) which slide in the first grooves (45) on the one hand and in the second grooves (44) on the other hand, so that the coupling elements (46) forcibly radially contract the clamping bush (1) when the clamping bolt (4) is moved from the clamping position to the unclamping position.

8. Bore clamp according to claim 6, **characterized in that** the reset device (38-47) has a positive-locking connection (47) between the clamping bush (1) and the clamping bolt (4), in particular with a T-slot, so that the positive-locking connection (47) radially contracts the clamping bush (1) in a positively guided manner when the clamping bolt (4) is moved from the clamping position into the unclamping position.

9. Bore clamp according to one of the preceding claims, **characterized in that** the pneumatic position sensing (30-36) is adapted for detection of at least one of the following positions of the tension bolt (5):
a) the clamping position,
b) the unclamping position,
c) a position of the tension bolt (5) within a tensioning range which permits a clamping process,
d) a clamped position in which the tension bolt (5) is tensioned and is outside the tensioning range.

10. Bore clamp according to any of the preceding claims, **characterized in that** the pneumatic position sensing comprises the following:
a) the tension bolt (5),
b) the cylinder (6) in which the tension bolt (5) is displaceable along the clamping direction.
c) a second compressed air line (35) which opens substantially radially into the cylinder (6) at a second opening,
d) a radial bore (36) in the tension bolt (5),
d1) whereas the radial bore (36) of the tension bolt (5) is aligned with the second opening of the second compressed air line (35) in the unclamping position,
d2) whereas the second opening of the second compressed air line (35) is closed by the lateral surface of the tension bolt (5) when the tension bolt (4) is located along the tensioning direction within a tensioning range which permits a clamping process,
d3) while the second opening of the second compressed air line (35) is released from the tension bolt (5) when the tension bolt (4) is tensioned through and is thus outside the tensioning range.

11. Bore clamp according to one of the preceding claims, **characterized by** an electrical position sensing device (48, 49) for sensing the position of the tension bolt (5), in particular for detecting at least one of the following positions of the tension bolt (5):
a) the clamping position,
b) the tension unclamping position,
c) a position of the tension bolt (5) within a tensioning range which permits a clamping process,
d) a clamped position in which the tension bolt (5) is tensioned and is outside the tensioning range.

12. Bore clamp according to claim 11, **characterized in**
a) **that** the electrical position sensing determines the axial position of the tension bolt (5) along the clamping direction as a quantitative variable, and
b) **that** the electrical position sensing calculates the diameter of the clamping bush (1) from the axial position of the tension bolt (5).

13. Bore clamp according to any one of claims 11 to 12, **characterized in**
a) **that** the bore clamp comprises a force sensor which measures the tensioning force acting on the tension bolt (5) during a clamping process,
b) **that** the clamping force acting on the tension bolt (5) shows an increase in force when the clamping bush (1), during its radial expansion, strikes against the inner wall of the workpiece bore (2),
c) **that** the bore clamp determines the axial position of the tension bolt (5) at the time of the increase in force,
d) **that** the bore clamp determines the axial position of the tension bolt (5) in the clamping position, and
e) **that** the bore clamp determines the radial penetration depth with which the clamping bush (1) penetrates in radial direction into the inner wall of the workpiece bore (2) from
e1) the axial position of the tension bolt (5) at the time of the force increase and
e2) the axial position of the tension bolt (5) in the clamping position.

14. Bore clamp according to any one of claims 11 to 12, **characterized in that** the electrical position sensor (48, 49) comprises the following:
a) a bevel (49) on the tension bolt (5), in particular as a chamfer or taper surface, and
b) a distance sensor (48), in particular an inductive distance sensor (48), which is mounted laterally next to the tension bolt (5) and measures the lateral distance to the slope (49) of the tension bolt (5), the lateral distance between the distance sensor (48) and the slope (49) of the tension bolt (5) being a measure of the axial position of the tension bolt (5) along the tensioning direction.

## Revendications

1. Dispositif de serrage dans des alésages pour le serrage d'une pièce à usiner (3) avec un alésage de pièce à usiner (2) se trouvant dans la pièce à usiner (3), avec
a) une douille de serrage (1) à insérer dans l'alésage de pièce à usiner (2), dans lequel la douille de serrage (1) peut être élargie radialement, de préférence avec plusieurs segments de serrage séparés, qui sont disposés de manière répartie sur la périphérie de la douille de serrage (1),
b) un boulon de serrage (4) qui passe coaxialement à travers la douille de serrage (1) et qui peut être déplacé axialement dans une direction de serrage entre une position de serrage et une position de desserrage,
b1) dans lequel le boulon de serrage (4) élargit radialement la douille de serrage (1) dans la position de serrage pour serrer la douille de serrage (1) dans l'alésage de pièce à usiner (2),
b2) tandis que le boulon de serrage (4) n'élargit pas radialement la douille de serrage (1) dans la position de desserrage afin que la douille de serrage (1) puisse être introduite dans l'alésage de pièce à usiner (2) ou retirée de l'alésage de pièce à usiner (2),
c) un entraînement de boulon de serrage (5, 6, 10-13) pour le déplacement axial du boulon de serrage (4) dans la direction de serrage dans la position de serrage, et
d) un dispositif d'interrogation de position pneumatique (30-36) pour la détection pneumatique de la position de serrage et de la position de desserrage,
**caractérisé en ce**
e) **que** l'entraînement de boulon de serrage (5, 6, 10-13) présente ce qui suit :
e1) un piston (11) déplaçable latéralement par rapport à la direction de serrage et
e2) un mécanisme à surfaces cunéiformes (10, 13) avec des surfaces cunéiformes (10, 13) glissant l'une sur l'autre pour convertir le mouvement latéral du piston (11) en un mouvement axial correspondant du boulon de serrage (4) dans la direction de serrage, et
f) **que** le dispositif d'interrogation de position pneumatique présente :
f1) le boulon de traction (5),
f2) le cylindre (6) dans lequel le boulon de traction (5) peut être déplacé le long de la direction de serrage,
f3) une première conduite d'air comprimé (32) qui débouche sur un premier point d'embouchure (33) à partir du côté pièce à usiner sensiblement axialement dans le cylindre (6),
• dans lequel le premier point d'embouchure (33) de la première conduite d'air comprimé (32) est fermé dans la position de desserrage par le boulon de traction (5),
• tandis que le premier point d'embouchure (33) de la première conduite d'air comprimé (32) est libéré dans la position de serrage par le boulon de traction (5).

2. Dispositif de serrage dans des alésages selon la revendication 1, **caractérisé en ce que** l'entraînement de boulon de serrage (5, 6, 10-13) entraîne le piston au moyen de l'un des types d'entraînement suivants :
a) électromoteur,
b) pneumatique,
c) hydraulique ou
d) mécanique au moyen d'un engrenage hélicoïdal.

3. Dispositif de serrage dans des alésages selon l'une quelconque des revendications précédentes, **caractérisé en ce**
a) **qu'**au moins l'une des surfaces cunéiformes (10, 13) est pourvue d'un revêtement réduisant les frottements et/ou réduisant l'usure, en particulier d'un revêtement DLC, et/ou
b) **que** les surfaces cunéiformes (10, 13) sont disposées dans un bain d'huile.

4. Dispositif de serrage dans des alésages selon l'une quelconque des revendications précédentes,
**caractérisé en ce**
a) **qu'**un capuchon (37) est fixé sur l'extrémité libre du boulon de serrage (4), dans lequel le capuchon (37) est de préférence fixé de manière détachable sur le boulon de serrage (4), et
b) **que** le capuchon (37) ferme de manière élastique la section de l'alésage de pièce à usiner (2) et empêche ainsi, dans le cas d'un alésage de pièce à usiner (2) ouvert en haut, une pénétration de corps étrangers provenant de l'alésage de pièce à usiner (2) dans la douille de serrage (1) élargie dans la position de serrage.

5. Dispositif de serrage dans des alésages selon l'une quelconque des revendications précédentes,
**caractérisé en ce que** l'entraînement de boulon de serrage présente ce qui suit :
a) un boulon de traction (5) qui est déplacé dans la direction de serrage par le mécanisme à surfaces cunéiformes (10, 13) dans un cylindre (6),
b) une fermeture à baïonnette pour l'ancrage libérable du boulon de serrage (4) dans le boulon de traction (5), et/ou
c) une sécurité antirotation (28, 29) qui empêche une rotation du boulon de serrage (4) par rapport au boulon de traction (5) pendant le fonctionnement.

6. Dispositif de serrage dans des alésages selon l'une quelconque des revendications précédentes, **caractérisé par** un dispositif de rappel (38-47) pour remettre l'élargissement radial de la douille de serrage (1) dans la position de serrage dans une position radialement contractée de la douille de serrage (1) dans la position de desserrage.

7. Dispositif de serrage dans des alésages selon la revendication 6, **caractérisé en ce que** le dispositif de rappel (38-47) présente ce qui suit :
a) une surface cunéiforme (38) périphérique sur la face inférieure de la douille de serrage (1) et une bague cunéiforme (40) sur la face inférieure de la douille de serrage (1) avec une surface cunéiforme (39) périphérique sur sa face supérieure, dans lequel les surfaces cunéiforme (38, 39) de la bague cunéiforme (40) d'une part et de la douille de serrage (1) d'autre part glissent l'une sur l'autre, ainsi qu'au moins un poussoir (41) s'étendant axialement, qui est d'une part relié au boulon de traction (5) et d'autre part presse contre la bague cunéiforme (40), de sorte que la bague cunéiforme (40) comprime radialement la douille de serrage (1) dans la position de desserrage ou
b) au moins un ressort (42), en particulier un ressort hélicoïdal (42), qui presse de l'extérieur sensiblement radialement sur la douille de serrage (1) avec une certaine force de rappel, dans lequel la force de rappel est de préférence réglable avec une vis d'ajustement (43), ou
c) des premières rainures (45) dans la surface d'enveloppe du boulon de serrage (4), dans lequel les premières rainures (45) s'étendent dans la direction longitudinale et présentent chacune un dégagement, et des deuxièmes rainures (44) dans la surface intérieure de la douille de serrage (1), dans lequel les deuxièmes rainures (44) s'étendent dans la direction longitudinale et présentent chacune un dégagement, et des éléments de couplage (46), qui glissent d'une part dans les premières rainures (45) et d'autre part dans les deuxièmes rainures (44), de sorte que les éléments de couplage (46) contractent radialement de manière forcée la douille de serrage (1) lorsque la douille de serrage (4) est déplacée à partir de la position de serrage dans la position de desserrage.

8. Dispositif de serrage dans des alésages selon la revendication 6, **caractérisé en ce que** le dispositif de rappel (38-47) présente une liaison par coopération de formes (47) entre la douille de serrage (1) et le boulon de serrage (4), en particulier avec une rainure en T, de sorte que la liaison par coopération de formes (47) contracte radialement de manière forcée la douille de serrage (1) lorsque le boulon de serrage (4) est déplacé à partir de la position de serrage dans la position de desserrage.

9. Dispositif de serrage dans des alésages selon l'une quelconque des revendications précédentes, **caractérisé en ce que** le dispositif d'interrogation de position pneumatique (30-36) est réalisé pour détecter au moins l'une des positions suivantes du boulon de traction (5) :
a) la position de serrage,
b) la position de desserrage,
c) une position du boulon de traction (5) à l'intérieur d'une plage de serrage qui permet un fonctionnement de serrage,
d) une position serrée dans laquelle le boulon de traction (5) est serré et se trouve en dehors de la plage de serrage.

10. Dispositif de serrage dans des alésages selon l'une quelconque des revendications précédentes, **caractérisé en ce que** le dispositif d'interrogation de position pneumatique présente :
a) le boulon de traction (5),
b) le cylindre (6) dans lequel le boulon de traction (5) peut être déplacé le long de la direction de serrage,
c) une deuxième conduite d'air comprimé (35), qui débouche sur un deuxième point d'embouchure sensiblement radialement dans le cylindre (6),
d) un alésage radial (36) dans le boulon de traction (5),
d1) dans lequel l'alésage radial (36) du boulon de traction (5) est aligné dans la position de desserrage avec le deuxième point d'embouchure de la deuxième conduite d'air comprimé (35),
d2) tandis que le deuxième point d'embouchure de la deuxième conduite d'air comprimé (35) est fermé par la surface d'enveloppe du boulon de traction (5) lorsque le boulon de serrage (4) se trouve le long de la direction de serrage à l'intérieur d'une plage de serrage qui permet un fonctionnement de serrage,
d3) pendant que le deuxième point d'embouchure de la deuxième conduite d'air comprimé (35) est libéré par le boulon de traction (5), lorsque le boulon de serrage (4) est serré et se trouve donc en dehors de la plage de serrage.

11. Dispositif de serrage dans des alésages selon l'une quelconque des revendications précédentes, **caractérisé par** un dispositif d'interrogation de position électrique (48, 49) pour interroger la position du boulon de traction (5), en particulier pour détecter au moins l'une des positions suivantes du boulon de traction (5) :
a) la position de serrage,
b) la position de desserrage,
c) une position du boulon de traction (5) à l'intérieur d'une plage de serrage qui permet un fonctionnement de serrage,
d) une position serrée dans laquelle le boulon de traction (5) est serré et se trouve en dehors de la plage de serrage.

12. Dispositif de serrage dans des alésages selon la revendication 11, **caractérisé en ce**
a) **que** le dispositif d'interrogation de position électrique détermine la position axiale du boulon de traction (5) le long de la direction de serrage en tant que grandeur quantitative, et
b) **que** le dispositif d'interrogation de position électrique calcule le diamètre de la douille de serrage (1) à partir de la position axiale du boulon de traction (5).

13. Dispositif de serrage dans des alésages selon l'une quelconque des revendications 11 à 12, **caractérisé en ce**
a) **que** le dispositif de serrage dans des alésages présente un capteur de force qui mesure la force de serrage qui agit sur le boulon de traction (5) lors d'un processus de serrage,
b) **que** la force de serrage agissant sur le boulon de traction (5) montre une augmentation de la force lorsque la douille de serrage (1) heurte la paroi intérieure de l'alésage de pièce à usiner (2) lors de son élargissement radial,
c) **que** le dispositif de serrage dans des alésages détermine la position axiale du boulon de traction (5) au moment de l'augmentation de la force,
d) **que** le dispositif de serrage dans des alésages détermine la position axiale du boulon de traction (5) dans la position de serrage, et
e) **que** le dispositif de serrage dans des alésages détermine la profondeur de pénétration radiale avec laquelle la douille de serrage (1) pénètre dans la direction radiale dans la paroi intérieure de l'alésage de pièce à usiner (2) et ce à partir de
e1) la position axiale du boulon de traction (5) au moment de l'augmentation de la force et
e2) la position axiale du boulon de traction (5) dans la position de serrage.

14. Dispositif de serrage dans des alésages selon l'une quelconque des revendications 11 à 12, **caractérisé en ce que** le dispositif d'interrogation de position électrique (48, 49) présente ce qui suit :
a) une inclinaison (49) sur le boulon de traction (5), en particulier en tant que chanfrein ou surface conique, et
b) un capteur de distance (48), en particulier un capteur de distance (48) inductif, qui est fixé latéralement à côté du boulon de traction (5) et mesure la distance latérale par rapport à l'inclinaison (49) du boulon de traction (5), dans lequel la distance latérale entre le capteur de distance (48) et l'inclinaison (49) du boulon de traction (5) est une mesure de la position axiale du boulon de traction (5) le long de la direction de serrage.
